# EUROPÄISCHE PATENTANMELDUNG

(11) **EP 1 619 006 A2**
(43) Veröffentlichungstag der Anmeldung: **25.01.2006**
(21) Anmeldenummer: 05012896.6
(22) Anmeldetag: 15.06.2005
(51) Int. Cl.: B29C 51/12, B29C 49/00, B29C 51/26, B29C 69/00, B29C 51/20

(54) **Verfahren und Vorrichtung zur Herstellung eines wenigstens ein Einsatzteil enthaltenden Hohlkörpers**

(30) Priorität: 19.07.2004 DE 102004034906
(71) Anmelder: GEISS Aktiengesellschaft, 96145 Sesslach (DE)
(72) Erfinder: Geiss, Manfred, 96145 Sesslach (DE)
(74) Vertreter: Weise, Reinhard

(57) **Zusammenfassung**

Zur Herstellung eines wenigstens ein Einsatzteil 33 enthaltenden Hohlkörpers 40 aus zwei Thermoplastzuschnitten 11, 12 mittels Vakuumverformung bzw. Thermoformung werden die Thermoplastzuschnitte 11, 12 in ein einziges verschließbares Maschinengehäuse eingebracht und separat gleichzeitig zu Formteilen in dem Maschinengehäuse geformt, wonach wenigstens ein Einsatzteil 33 in ein Formteil 12' eingelegt und fixiert, die Formteile zusammen gebracht und in pressender Anlage verschweißt werden, wonach der fertige Hohlkörper 40 mit integriertem Einsatzteil 33 nach Öffnen des Maschinengehäuses ausgebracht wird. Die Vorrichtung 10 weist hierfür zwei Formstationen 14 und 15 mit jeweiligen Einrichtungen zum Bewegen des Formwerkzeugs 30, 31 zum Spannen und Beheizen eines Thermoplastzuschnitts und zum Anordnen und Befestigen des wenigstens einen Einsatzteils 33 in einem Fo rmteil 12' auf, wobei das Formteil 12' mit dem darin befestigten Einsatzteil 33 mittels der Bewegungseinrichtung des zugehörigen Formwerkzeugs 31 zur Anlage an und zum Verschweißen mit dem anderen Formteil 11' bewegbar ist.

## Beschreibung

Die Erfindung betrifft ein Verfahren zur Herstellung eines wenigstens ein Einsatzteil enthaltenden Hohlkörpers aus zwei Thermoplastzuschnitten mittels Vakuumverformung bzw. Thermoformung sowie eine derartige Vorrichtung.

Zur Herstellung von Hohlkörpern aus zwei Thermoplastzuschnitten mittels Vakuumverformung bzw. Thermoformung ist bereits ein spezielles Verfahren bekannt, das auch als Twinsheet-Verfahren bezeichnet wird. Dabei werden zwei Thermoplastzuschnitte erwärmt, vakuumverformt und anschließend mit der bei ihnen vorhandenen Wärme zu einem Hohlkörper verschweißt. Dieses Verfahren wird üblicherweise auf einer Einstationenmaschine durchgeführt, wobei zwei übereinander eingespannte Thermoplastzuschnitte erwärmt und verarbeitet werden. Als nachteilig ist hierbei jedoch anzusehen, dass in das Innere des Hohlkörpers keine zusätzlichen Bauteile bzw. Einsatzteile eingebracht werden können, weil die beiden Thermoplastzuschnitte mittels eines Haltesystems luftdicht in einem definierten Abstand gehalten werden müssen, um ein unkontrolliertes Durchhängen der einzelnen Thermoplastzuschnitte zu verhindern.

Um Zusatzteile bzw. Einsatzteile in das Innere der Formteile einzubringen, wäre es auch denkbar, das so genannte Twinsheet-Verfahren bei Mehrstationenmaschinen anzuwenden, bei denen die Formteile nacheinander hergestellt und vor ihrem Zusammenfügen durch eingelegte Einsatzteile ergänzt werden. Nachteilig ist dabei jedoch, dass bei derartigen Mehrstationenmaschinen die beheizten Thermoplastzuschnitte zunächst in einer Heizstation aufgeheizt und anschließend durch stehende Luft in die nachgeordnete Formstation bewegt werden, wobei der Durchhang der Thermoplastzuschnitte nicht kontrolliert und beeinflusst werden kann. Hinzu kommt, dass auch der Zeitaufwand für die Herstellung derartiger Formteile erheblich ist, da die beiden Formteile nacheinander geformt werden.

Der Erfindung liegt demgemäß die Aufgabe zugrunde, ein Verfahren und eine Vorrichtung der eingangs genannten Gattung verfügbar zu machen, durch das bzw. durch die Hohlkörper mit mindestens einem integrierten Einsatzteil schnell und mit hoher Qualität geschaffen werden können.

Erfindungsgemäß wird diese Aufgabe verfahrensseitig durch die im Patentanspruch 1 genannten Merkmale und vorrichtungsseitig durch die im Patentanspruch 9 genannten Merkmale gelöst.

Bevorzugte weitere Ausgestaltungen des Verfahrens sind in den nachgeordneten Patentansprüchen 2 bis 8 angegeben, während bevorzugte weitere Ausgestaltungen der Vorrichtung in den Ansprüchen 10 bis 13 genannt sind.

Aufgrund der erfindungsgemäßen Ausgestaltung des Verfahrens und der Vorrichtung lassen sich Hohlkörper aus thermoplastischem Material mit wenigstens einem Einsatzteil zuverlässig mit hoher Qualität und Geschwindigkeit herstellen. Hierzu werden fortlaufend beide Formteile gleichzeitig in einem einzigen geschlossenen Milieu hergestellt und unter Einfügung wenigstens eines Einsatzteils sicher und zuverlässig verschweißt. Lediglich zum Einbringen der Thermoplastzuschnitte und zum Ausbringen des fertigen Hohlkörpers mit dem wenigstens einen integrierten Einsatzteil erfolgt ein Öffnen des verschließbaren Maschinengehäuses, wobei bevorzugt die beiden Thermoplastzuschnitte für das obere Formteil und für das untere Formteil gleichzeitig eingebracht werden und bevorzugt das Einbringen der Thermoplastzuschnitte und das Ausbringen des fertigen Hohlkörpers taktgleich vorgenommen wird.

Die in dem verschließbaren Maschinengehäuse vorgesehenen beiden Formstationen haben prinzipiell den selben Aufbau, wobei eine Formstation ein Formwerkzeug für ein oberes Formteil und die andere Formstation ein Formwerkzeug für das untere Formteil aufweisen und wobei für das Vakuumverformen bzw. Thermoformen ein den jeweiligen Werkzeughälften zugeordneter Spannrahmen und bevorzugt jeweils ein stufenlos verstellbares Einzelplattensystem für die gegenüber liegenden Randseiten des Thermoplastzuschnitts vorgesehen ist.

Für das Zusammenbringen der Formteile ist vorteilhaft vorgesehen, dass ein Formteil aus der Spannposition in der einen Formstation freigegeben und zusammen mit dem Formwerkzeug zu der anderen sich noch in seiner Spannposition in der Formstation befindenden Formteil bewegt wird.

Die jeweiligen Thermoplastzuschnitte werden bevorzugt bei jeder Formstation vor dem Formen mittels Heizeinrichtungen beidseitig beheizt, wobei die Heizeinrichtungen nach dem Formen aus ihrer Arbeitsstellung in eine Ruhestellung außerhalb des Bereichs der Formwerkzeuge bewegt werden. Hierdurch wird eine außerordentlich kompakte Gestaltung der Vorrichtung mit kurzen Bewegungswegen für die Formteile und das fertige Hohlteil erreicht.

Der für jede Formstation vorgesehene Spannrahmen ist bevorzugt von allen Rändern des Thermoplastzuschnitts zur Freigabe des Formteils weg bewegbar, und vorteilhaft weist zudem jede Formstation ein stufenlos verstellbares Fensterplattensystem auf, das für die Anordnung des Thermoplastzuschnitts auf dem Spannrahmen vorzugsweise taktweise auseinander fahrbar ist.

Für den innerhalb der Vorrichtung vorgesehenen Bewegungsablauf ist bevorzugt eine Bewegungseinrichtung für das untere Formteil mit dem darin befindlichen Einsatzteil zum Absenken und Anheben im Bereich der zu dem Formteil gehörenden Formstation sowie für eine seitliche Verlagerung zu der anderen Formstation und zum Anheben und Absenken im Bereich der anderen Formstation vorgesehen.

Nach einer weiteren bevorzugten Ausgestaltung der Vorrichtung weist die Formstation, an der die beiden Formteile verschweißt werden, zum Entfernen des Hohlkörpers aus dem heranbewegten Formwerkzeug Angriffselemente auf, die unter dem Spannrand der oberen Formteilhälfte bewegbar und zusammen mit dem oberen Formwerkzeug anhebbar und zur Freigabe des Hohlkörpers für das Ausbringen nach dem Öffnen des zugeordneten Spannrahmens auseinander bewegbar sind. Hierdurch wird ein außerordentlich einfaches, wirkungsvolles und zuverlässiges Handling des Hohlkörpers innerhalb des geschlossenen Maschinengehäuses verwirklicht.

Nach einer weiteren Ausgestaltung der Erfindung weist das Maschinengehäuse zum Einbringen von Thermoplastzuschnitten und zum Ausbringen von hergestellten Hohlkörpern wenigstens eine verschließbare Öffnung auf, durch die vorzugsweise ein Beschickungswagen für das gleichzeitige Einbringen der beiden Thermoplastzuschnitte, vorzugsweise an seite, vorgesehen ist. Vorteilhaft wird hierdurch ein Handling mit einem einzigen Handhabungsorgan verwirklicht, das fortlaufend ein taktgleiches Einbringen und Ausbringen ermöglicht.

Nach einer weiteren Ausgestaltung der Erfindung weist jede Formstation eine Heizeinrichtung für die Oberfläche des Thermoplastzuschnitts und eine Heizeinrichtung für die Unterseite des Thermoplastzuschnitts auf, wobei jede Heizeinrichtung aus einer Arbeitsstellung in eine außerhalb des Bereichs der Formwerkzeuge liegende Ruhestellung bewegbar ist.

Nach einer weiteren Ausgestaltung der Erfindung ist weiterhin vorgesehen, dass die Thermoplastzuschnitte für die Herstellung der Formteilhälften unterschiedlich groß sind, wobei das untere Formteil, in das das wenigstens eine Einsatzteil angeordnet ist, zur Bildung eines Angriffsrandes für die Angriffselemente an dem Rand des oberen Formteils einen vergleichsweise kleineren Rand als das obere Formteil aufweist.

Weitere Einzelheiten, Merkmale und Vorteile der Erfindung sind dem nachfolgenden Beschreibungsteil zu entnehmen, in dem ein Ausführungsbeispiel der Erfindung unter Bezugnahme auf die beigefügten Zeichnungen näher erläutert wird. Es zeigen:
- Fig. 1: eine schematische Darstellung eines Ausführungsbeispiels einer erfindungsgemäßen Vorrichtung in einer Stellung, in der die beiden Formstationen bereits mit einem Thermoplastzuschnitt beschickt sind;
- Fig. 2: eine schematische Darstellung der Vorrichtung gemäß Fig. 1, wobei die beiden Thermoplastzuschnitte bereits gleichzeitig verformt sind und ein Einsatzteil in das rechte Formteil eingebracht ist;
- Fig. 3: eine schematische Darstellung der Vorrichtung gemäß Fig. 1 in einer Phase, in der sich das untere Formteil mit dem daran befestigten Einsatzteil nach Freigabe von der rechten Formstation zu der linken Formstation hinüber bewegt;
- Fig. 4: eine schematische Darstellung der Vorrichtung von Fig. 1, wobei die beiden Formteile in der linken Formstation zusammen gebracht und verschweißt sind;
- Fig. 5: eine schematische Darstellung der Vorrichtung gemäß Fig. 1, in einer Herstellungsphase, in der der Hohlkörper durch Angriffselemente zum Entformen von dem unteren Werkzeug angehoben ist und das untere Werkzeug abgesenkt ist;
- Fig. 6: eine schematische Darstellung der Vorrichtung gemäß Fig. 1 in einer Phase, die unmittelbar nach der Phase gemäß Fig. 5 folgt, wobei ein Beschickungswagen mit zwei neuen Thermoplastzuschnitten einfährt; und
- Fig. 7: eine schematische Darstellung der Vorrichtung gemäß Fig. 1 in einer der Fig. 6 folgenden Phase, bei der die Thermoplastzuschnitte bereits in den Formstationen abgelegt sind und der zuvor hergestellte Hohlkörper mit integriertem Einsatzteil nach dem Öffnen der Angriffselemente auf der Oberseite des Beschickungswagens zum Abtransport heruntergefallen ist.

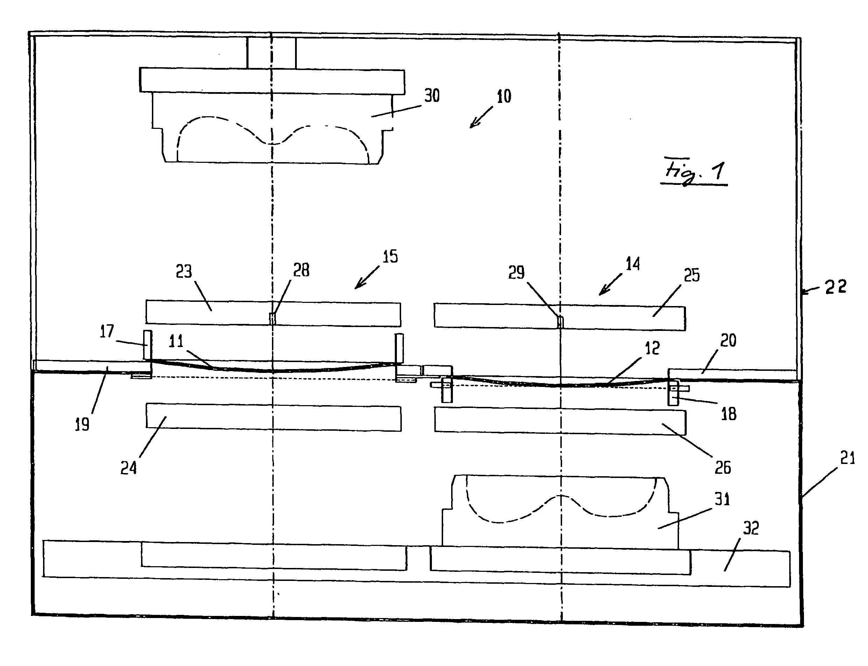

In den Figuren ist schematisiert eine Vorrichtung 10 zur Herstellung eines wenigstens ein Einsatzteil enthaltenden Hohlkörpers aus zwei Thermoplastzuschnitten 11, 12 mittels Vakuumverformung bzw. Thermoverformung dargestellt. In Fig. 1 befinden sich die viereckigen Thermoplastzuschnitte 11 bzw. 12 jeweils in zugeordneten Formstationen 15 bzw. 14, wobei sie randseitig jeweils zwischen einem Spannrahmen 17 bzw. 18 und einem Fensterplattensystem 19 bzw. 20 eingespannt sind und aufgrund des Eigengewichts nach unten in Richtung eines geschlossenen Gehäuses 21 durchhängen. Das Gehäuse 21 ist geschlossen, und es ist dadurch möglich, die sich bei Erhitzung erweichenden Thermoplastzuschnitte durch einen geringen Überdruck in dem Gehäuse 21 kontrolliert zu stützen, durch ein ungewünschtes Durchhängen der Thermoplastzuschnitte vermieden wird und der Durchgang gezielt in einem vorgegebenen Bereich gehalten werden kann.

Jede der Formstationen 14 und 15 weisen eine obere Heizeinrichtung 23 bzw. 25 für die Oberseite der Thermoplastzuschnitte 11 bzw. 12 und eine unterseitige Heizeinrichtung 24 bzw. 26 für die Unterseite der Thermoplastzuschnitte 11 bzw. 12 auf. Die oberen Heizungseinrichtungen sind mit einem Temperatursensor 28 bzw. 29 versehen. Ein derartiger Temperatursensor kann auch an der unteren Heizeinrichtung 24 und 26 vorgesehen sein.

Oberhalb der Heizstation 23 ist bei der linken Formstation 15 ein Formwerkzeug 30 für die Herstellung der oberen Formhälfte des Hohlkörpers dargestellt. Für das Herstellen der unteren Formteilhälfte des Hohlkörpers ist bei der rechten Formstation 14 innerhalb des Gehäuses 21 ein Formwerkzeug 31 vorgesehen. Das untere Formwerkzeug 31 ist auf einem Verschiebetisch 32 angeordnet und kann, wie noch erläutert wird, auf dem Tisch in eine Stellung unterhalb der Heizeinrichtung 24 in der Formstation 15 verbracht werden.

Umgeben ist die in den Figuren dargestellte Vorrichtung von einem verschließbaren Maschinengehäuse 22, das zum Einbringen von Thermoplastzuschnitten und zum Ausbringen von hergestellten Hohlkörpern wenigstens eine nicht dargestellte verschließbare Öffnung aufweist

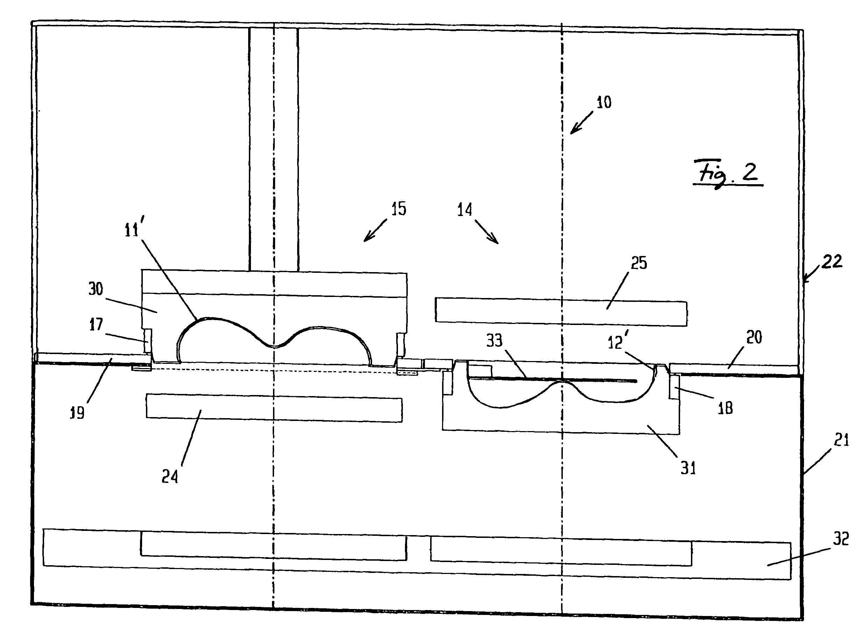

In Fig. 2 ist eine Phase der Herstellung gezeigt, bei der die Heizeinrichtungen 23 und 26 aus dem Bereich der Formwerkzeuge vorzugsweise seitlich heraus bewegt sind und das Formwerkzeug 30 auf dem Spannrahmen 17 sitzt und das Formwerkzeug 31 von unten an dem Spannrahmen 18 anliegt. Der Thermoplastzuschnitt 11 ist zu einem Formteil 11' in der Formstation 15 umgeformt worden, dessen Ränder sich zwischen dem Spannrahmen 17 und dem Fensterplattensystem 19 befindet. Der Thermoplastzuschnitt 12 ist in ein unteres Formteil 12' geformt, dessen umlaufende Ränder sich zwischen dem Spannrahmen 18 und dem Fensterplattensystem 20 befinden. In dem unteren Formteil 12' ist ein Einsatzteil 33 in nicht dargestellter Weise durch Klemmen, Verkleben oder Verschweißen befestigt.

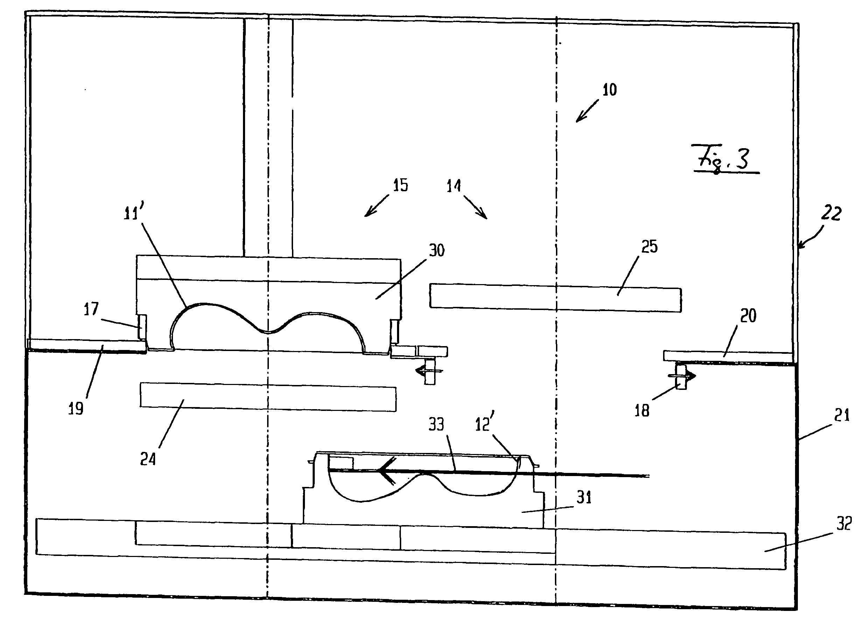

Fig. 3 zeigt eine anschließende Phase der Herstellung des Hohlkörpers, bei der in der Formstation 15 das obere Formteil 11' nach wie vor zwischen dem Spannrahmen 17 und dem Fensterplattensystem 19 randseitig gehalten ist. Bei der rechten Formstation 14 wurde jedoch der Spannrahmen 18 randseitig nach rechtem Abheben von dem Rand des unteren Formteils 12 nach außen bewegt, um das Formteil 12' freizugeben. Dieses hat sich dann gemeinsam mit dem unteren Formwerkzeug 31 nach unten bewegt und befindet sich in Fig. 3 auf dem Verschiebetisch 32 auf dem Weg zu der Formstation 15 zur Positionierung unterhalb des oberen Formteils 11 '.

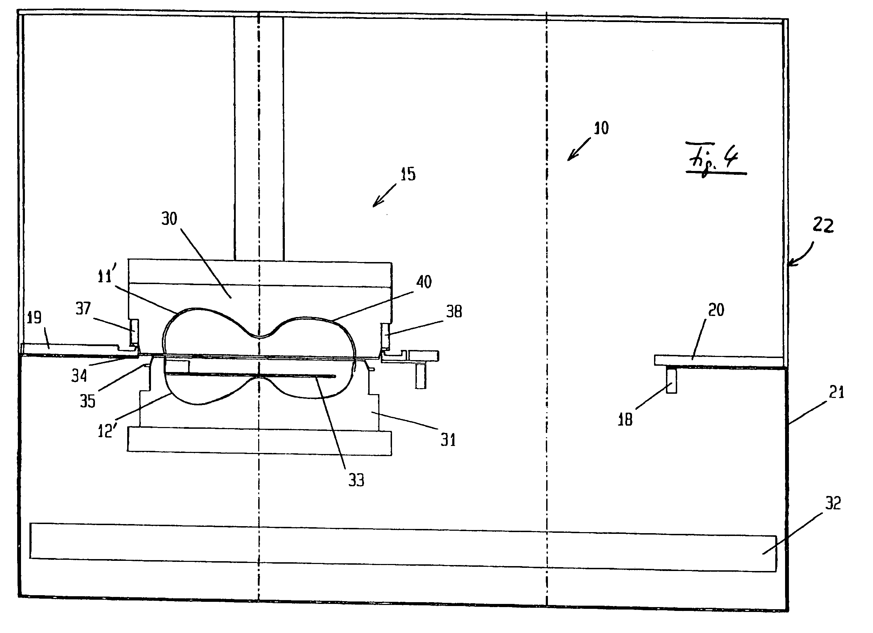

Fig. 4 zeigt eine weitere Phase der Herstellung, bei der das untere Formteil 12' und das obere Formteil 11' randseitig aneinander gepresst und verschweißt sind, wobei ersichtlich der umlaufende Rand 34 des oberen Formteils 11' breiter ist als der umlaufende Rand 35 des unteren Formteils 12'.

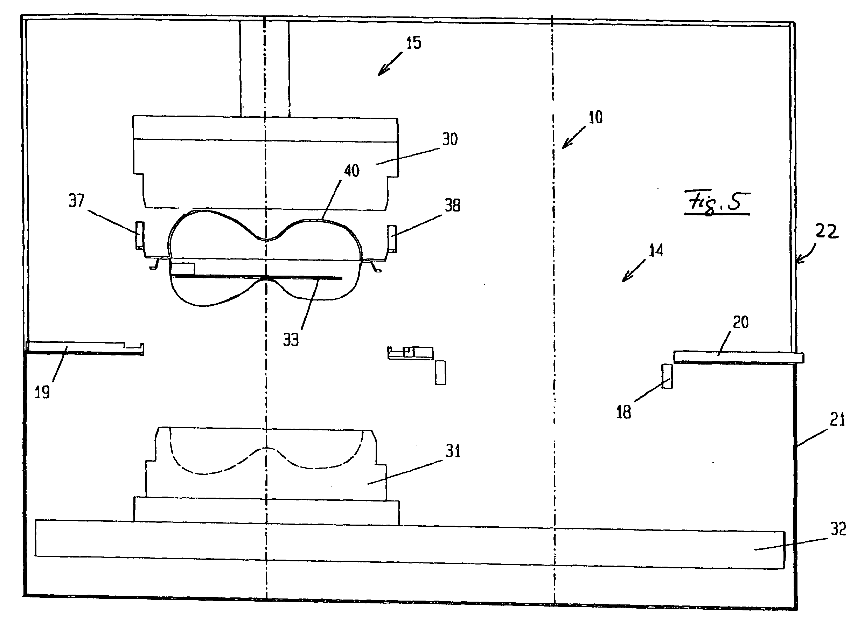

In der in Fig. 4 dargestellten Phase kühlt der Hohlkörper bereits ab. Das Fensterplattensystem 19 ist geöffnet und ermöglicht das Untergreifen von Angriffselementen 37 bzw. 38 unterhalb eines abgekröpften Abschnitts des umlaufenden Randes 34 des oberen Formteils 11'. Die Angriffselemente 37 und 38 sind regelmäßig über den Umfang des Randes 34 verteilt angeordnet, wobei ihre Anzahl je nach Bedarf festgelegt ist. Die Heizeinrichtung 24, die in Fig. 3 noch zu sehen ist, wurde vor der Aufwärtsbewegung des unteren Formwerkzeugs 31 vorzugsweise seitlich aus dem Bereich der Formstation 15 heraus bewegt. Die Angriffselemente 37 und 38 sind an dem oberen Formwerkzeug 30 angelenkt und bewegen sich mit diesem, wie in Fig. 5 gezeigt, in der nächsten Phase der Herstellung nach oben von dem Fensterplattensystem 19 weg, während das untere Formwerkzeug 31 sich nach unten auf den Bewegungstisch 32 bewegt hat.

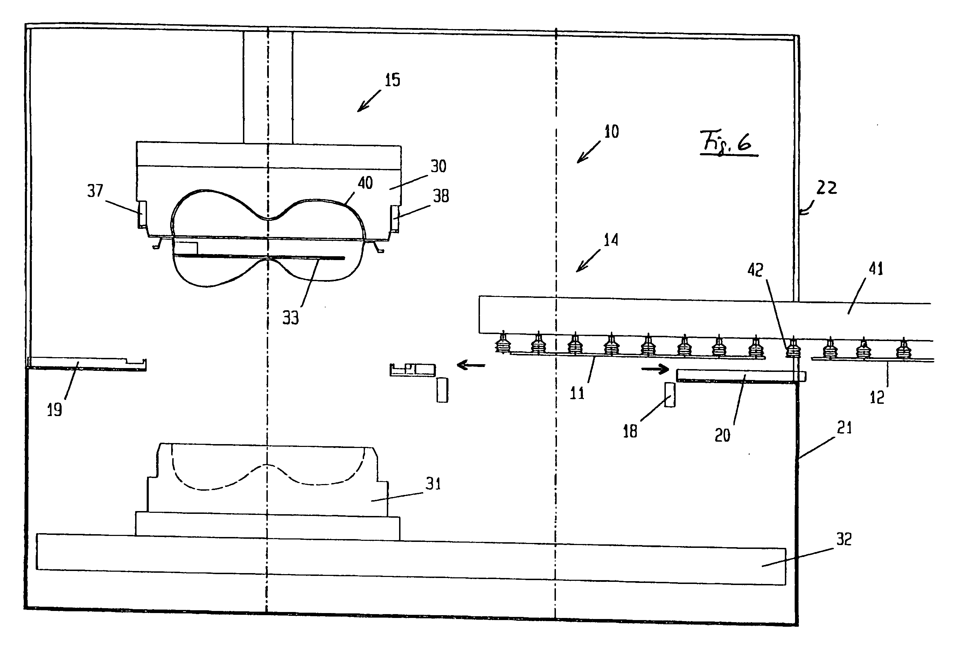

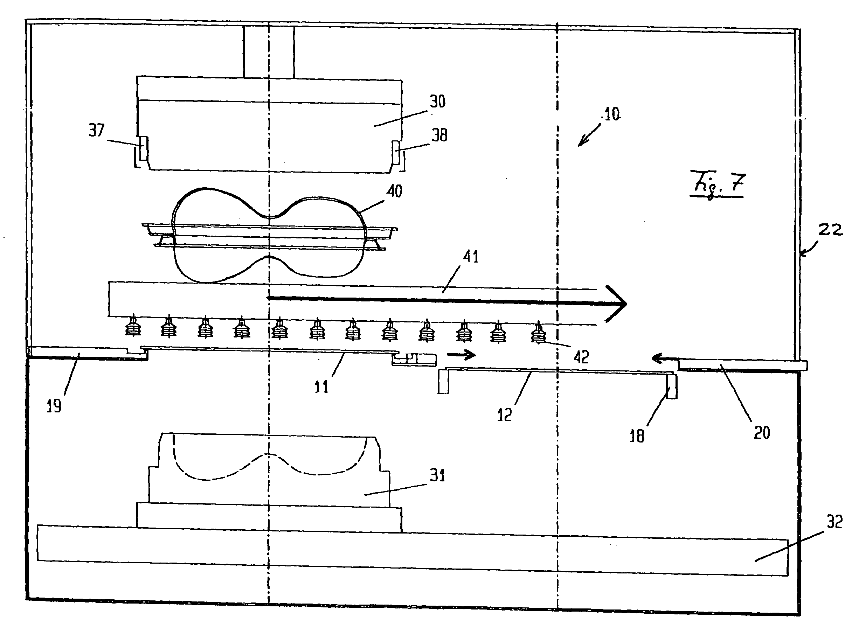

Fig. 6 unterscheidet sich von der Darstellung gemäß Fig. 5 lediglich dadurch, dass ein Beschickungswagen 41 schematisiert dargestellt ist, der über unterseitige Saugnäpfe 42 neue Thermoplastzuschnitte 11 und 12 in die Formstationen 14 und 15 einbringt. In der Formstation 14 ist das Fensterplattensystem 20 geöffnet, damit der neue Thermoplastzuschnitt 12 auf den Spannrahmen 18 fallen kann, der sich in der in Fig. 1 gezeigten Ausgangsposition befindet. Das Fensterplattensystem 19 der Formstation 15 befindet sich in der geschlossenen Arbeitsstellung gemäß Fig. 1, um den von dem Beschickungswagen 41 herabfallenden neuen Thermoplastzuschnitt 11 aufzunehmen, wie in Fig. 7 gezeigt.

Bei der in Fig. 7 dargestellten Herstellungsverfahrensweise liegt der Thermoplastzuschnitt 12 auf dem Spannrahmen auf und als nächstes wird dann das Fensterplattensystem 20 in die in Fig. 1 dargestellte Arbeitsstellung zur randseitigen Einspannung des Formplattenzuschnitts 12 bewegt.

Das untere Formwerkzeug 31 befindet sich noch im Bereich der linken Formstation 15 und bewegt sich dann anschließend nach rechts in die Formstation 14, wie in Fig. 1 angedeutet. Das obere Formwerkzeug 30 befindet sich nach wie vor oberhalb des Beschickungswagens 41, wobei zwischenzeitlich jedoch die Angriffselemente 37 und 38 den umlaufenden Rand 34 des Hohlkörpers 40 freigegeben haben und der Hohlkörper 40 zum Ausbringen auf der Oberseite des Beschickungswagens 41 angeordnet ist. Nach seitlichem Herausfahren des Beschickungswagens 41 ohne die zuvor eingebrachten neuen Thermoplastzuschnitte 11 und 12 und mit dem darauf befindlichen hergestellten Hohlkörper 40 ist die Herstellung des Hohlkörpers 40 abgeschlossen und ein neuer Herstellungszyklus mit den neuen Thermoplastzuschnitten 11 und 12 kann, wie im Zusammenhang mit den Fig. 1 bis 7 beschrieben, begonnen werden.

## Patentansprüche

1. Verfahren zur Herstellung eines wenigstens ein Einsatzteil enthaltenden Hohlkörpers aus zwei Thermoplastzuschnitten mittels Vakuumverformung bzw. Thermoformung, mit folgenden Verfahrensschritten:
Einbringen der Thermoplastzuschnitte in ein einziges verschließbares Maschinengehäuse;
separates gleichzeitiges Formen der Thermoplastzuschnitte zu Formteilen in dem Maschinengehäuse;
Einlegen und Fixieren wenigstens eines Einsatzteils in ein Formteil in dem Maschinengehäuse;
Zusammenbringen der Formteile in eine pressende Anlage und Verschweißen in dem Maschinengehäuse; und
Ausbringen des fertigen Hohlkörpers mit integriertem Einsatzteil nach Öffnen des Maschinengehäuses.

2. Verfahren nach Anspruch 1, **dadurch gekennzeichnet, dass** das Formen der Thermoplastzuschnitte entsprechend in einer Formstation für ein oberes Formteil und in einer separaten Formstation für ein unteres Formteil vorgenommen wird.

3. Verfahren nach Anspruch 1 oder 2, **dadurch gekennzeichnet, dass** für das Zusammenbringen der Formteile ein Formteil aus der Spannposition in der zugehörigen Formstation freigegeben und zusammen mit dem Formwerkzeug zu dem anderen sich noch in seiner Spannposition in der zugehörigen Formstation befindenden Formteil bewegt wird.

4. Verfahren nach einem der vorangehenden Ansprüche, **dadurch gekennzeichnet, dass** bei jeder Formstation vor dem Formen eine beidseitige Beheizung mittels Heizeinrichtungen vorgenommen wird.

5. Verfahren nach Anspruch 4, **dadurch gekennzeichnet, dass** die Heizeinrichtungen nach dem Formen aus ihrer Arbeitsstellung in eine Ruhestellung außerhalb des Bereichs der Formwerkzeuge bewegt werden.

6. Verfahren nach einem der vorangehenden Ansprüche, **dadurch gekennzeichnet, dass** die Thermoplastzuschnitte gleichzeitig in das geöffnete Maschinengehäuse eingebracht werden.

7. Verfahren nach einem der vorangehenden Ansprüche, **dadurch gekennzeichnet, dass** das Einbringen der Thermoplastzuschnitte und das Ausbringen des fertigen Hohlkörpers taktgleich vorgenommen wird.

8. Verfahren nach einem der vorangehenden Ansprüche, **dadurch gekennzeichnet, dass** jedes Einsatzteil durch Klemmen, Verkleben oder Verschweißen fixiert wird.

9. Vorrichtung zur Herstellung eines wenigstens ein Einsatzteil (33) enthaltenden Hohlkörpers (40) aus zwei Thermoplastzuschnitten (11, 12) mittels Vakuumverformung bzw. Thermoformung, bestehend aus
einem verschließbaren Maschinengehäuse (22), in dem zwei Formstationen (14, 15) mit jeweiligen Einrichtungen zum Bewegen des Formwerkzeugs (30, 31), zum Spannen (17, 18) und Beheizen (23, 24; 25, 26) eines Thermoplastzuschnitts und
zum Anordnen und Befestigen des wenigstens einen Einsatzteils (33) in ein Formteil (12') in einer Formstation (14) angeordnet sind,
wobei das Formteil (12') mit dem darin befestigten Einsatzteil (33) mit der Bewegungseinrichtung (32) des zugehörigen Formwerkzeugs (31) zur Anlage und zum Verschweißen an das andere Formteil (11') bewegbar ist.

10. Vorrichtung nach Anspruch 9, **dadurch gekennzeichnet, dass** jede Formstation (14, 15) einen Spannrahmen (17, 18) aufweist, der von allen Rändern des Thermoplastzuschnitts (11, 12) zur Freigabe des Formteils (11', 12') weg bewegbar ist.

11. Vorrichtung nach Anspruch 9 oder 10, **dadurch gekennzeichnet, dass** jede Formstation (14, 15) ein stufenlos verstellbares Fensterplattensystem (19, 20) aufweist, das für die Anordnung des Thermoplastzuschnitts (11, 12) auf dem Spannrahmen (17, 18) vorzugsweise taktweise auseinander fahrbar ist.

12. Vorrichtung nach einem der Ansprüche 9 bis 11, **dadurch gekennzeichnet, dass** die Bewegungseinrichtung für das untere Formteil (31) mit dem darin befestigten Einsatzteil (33) für ein Absenken und Anheben im Bereich der zu dem Formteil (12') gehörenden Formstation (14), für eine seitliche Verlagerung (32) zu der anderen Formstation (15) und zum Anheben und Absenken im Bereich der anderen Formstation (15) vorgesehen ist.

13. Vorrichtung nach einem der Ansprüche 9 bis 12, **dadurch gekennzeichnet, dass** zum Entfernen des Hohlkörpers (40) aus dem heranbewegten Formwerkzeug (31) in der anderen Formstation (15) Angriffselemente (37, 38) vorgesehen sind, die unter den Spannrand (34) des oberen Formteils (11') bewegbar und zusammen mit dem oberen Formwerkzeug (30) anhebbar und zur Freigabe des Hohlkörpers (40) für dessen Ausbringen aus dem unteren Formwerkzeug (31) nach dem Öffnen des zugeordneten Spannrahmens (17) auseinander bewegbar sind.

14. Vorrichtung nach einem der Ansprüche 9 bis 13, **dadurch gekennzeichnet, dass** das Maschinengehäuse (22) zum Einbringen von Thermoplastzuschnitten (11, 12) und zum Ausbringen von hergestellten Hohlkörpern (40) wenigstens eine verschließbare Öffnung aufweist.

15. Vorrichtung nach einem der Ansprüche 9 bis 14, **dadurch gekennzeichnet, dass** ein Beschickungswagen (41) für das gleichzeitige Einbringen der beiden Thermoplastzuschnitte (11, 12), vorzugsweise an seiner Unterseite, und für das Ausbringen des Hohlkörpers (40), vorzugsweise auf seiner Oberseite, vorgesehen ist.

16. Vorrichtung nach einem der Ansprüche 9 bis 15, **dadurch gekennzeichnet, dass** jede Formstation (14, 15) eine Heizeinrichtung (23, 25) für die Oberfläche des Thermoplastzuschnitts (11, 12) und eine Heizeinrichtung (24, 26) für die Unterseite des Thermoplastzuschnitts (11, 12) aufweist, wobei jede Heizeinrichtung (23, 24, 25, 26) aus einer Arbeitsstellung in eine außerhalb des Bereichs der Formwerkzeuge (30, 31) liegende Ruhestellung bewegbar ist.

17. Vorrichtung nach einem der Ansprüche 9 bis 16, **dadurch gekennzeichnet, dass** das untere Formteil (12'), in dem das wenigstens eine Einsatzteil (33) angeordnet ist, zur Bildung eines Angriffsrandes (34) für Angriffselemente (37, 38) einen vergleichsweise kleineren Rand als das obere Formteil (11') aufweist.
